**Europäisches Patentamt**

(19) **European Patent Office**

**Office européen des brevets**

(11) Veröffentlichungsnummer: **0 025 900**
**B1**

(12) **EUROPÄISCHE PATENTSCHRIFT**

(45) Veröffentlichungstag der Patentschrift:
10.07.85

(51) Int. Cl.⁴: **C 01 F 7/02**, C 01 B 33/12,
B 01 J 21/04, B 01 J 21/08,
B 01 J 35/08

(21) Anmeldenummer: **80105183.0**

(22) Anmeldetag: **30.08.80**

(54) **Verfahren zur Herstellung von kugelförmigen Formkörpern auf Basis von Al2O3 sowie deren Verwendung.**

(30) Priorität: **06.09.79 DE 2935914**

(43) Veröffentlichungstag der Anmeldung:
**01.04.81 Patentblatt 81/13**

(45) Bekanntmachung des Hinweises auf die Patenterteilung:
**10.07.85 Patentblatt 85/28**

(84) Benannte Vertragsstaaten:
**AT BE CH DE FR GB IT LI NL SE**

(56) Entgegenhaltungen:
**EP - A - 0 003 217**
**DD - A - 137 800**
**DE - A - 2 150 346**
**DE - A - 2 256 849**
**DE - A - 2 615 868**
**DE - A - 2 639 285**
**DE - A - 2 751 269**
**DE - B - 1 224 282**
**DE - B - 2 043 570**
**DE - B - 2 511 967**
**GB - A - 1 422 452**
**US - A - 2 603 609**

**Chemical Abstracts Band 87, Nr. 6, 8. August 1977
Columbus, Ohio, USA K. BECKER et al. "Catalyst**

(73) Patentinhaber: **Kali-Chemie Aktiengesellschaft,
Postfach 220 Hans-Böckler-Allee 20,
D-3000 Hannover 1 (DE)**

(72) Erfinder: **Derleth, Helmut Dipl.-Chem., Dr.rer.nat.,
Grosse Drakenburger Strasse 58, D-3070 Nienburg (DE)**
Erfinder: **Bretz, Karl-Heinz, Berliner Ring 202,
D-3070 Nienburg (DE)**
Erfinder: **Sauer, Günther, Prinzenstrasse 51,
D-3070 Nienburg (DE)**

(56) Entgegenhaltungen: (Fortsetzung)
**development in the German Democratic Republic" Seite
352, Spalte 1, Abstract Nr. 44645q**

**Die Akte enthält technische Angaben, die nach dem
Eingang der Anmeldung eingereicht wurden und die
nicht in dieser Patentschrift enthalten sind.**

BUNDESDRUCKEREI BERLIN

0 025 900

## Beschreibung

Die Erfindung betrifft ein Verfahren zur Herstellung Aluminiumoxyd bzw. -hydroxid enthaltender Formkörper, insbesondere kugelförmiger Formkörper, sowie deren Verwendung.

Adsorptionsmittel, Katalysatoren und -träger werden hauptsächlich in konfektionierter Form eingesetzt. Gegenüber anderen Formen zeichnet sich die Kugelgestalt durch viele Vorteile aus, wie z. B. gleichmäßige Packung, geringer Strömungswiderstand, leichte Beschickung, hohes Schüttgewicht, gute Abriebfestigkeit, guter Berstdruck etc.

Verfahren zur Herstellung kugeliger Formkörper auf Basis $Al_2O_3$ sind bereits bekannt.

So können z. B. unbeständige oder beständige $Al_2O_3$-Sole nach dem Sol-Gel-Verfahren in ein Formöl oder Mischungen aus Oxid, Härtemittel und Flüssigkeit in eine Erstarrungslösung vertropft und anschließend zu oxidhaltigen Kugeln aufgearbeitet werden.

Diese Verfahren weisen aber Nachteile auf, wie z. B.

— zusätzlichen Einsatz teurer $Al_2O_3$-Sole, Aluminiumsalze oder spezieller Chemikalien wie Geliermittel, Formöl oder Erstarrungslösung;
— zusätzlichen Verfahrensstufen wie Altern oder Waschen;
— begrenzte Korngröße.

Ausgehend von Hydroxiden bzw. Oxidhydraten des Aluminiums sind Agglomerationsverfahren bekannt, bei denen zunächst Aluminiumoxid- bzw. Hydroxid entwässert und aufgemahlen wird. Das so erhaltene Pulver wird unter Flüssigkeitzusatz granuliert und nach Reifung getrocknet und getempert.

Die erforderliche Aufbereitung des Granulierpulvers und Reifung der grünen Pellets ist aber aufwendig und energieintensiv. Darüber hinaus liefert die Granulation durch abwechselndes Befeuchten und Pudern Produkte mit unerwünschtem Schalenaufbau und verminderter Festigkeit.

Agglomerationsverfahren, die ohne Entwässern und Reifung auskommen, müssen das gemahlene Pulver unter Zusatz von Säure und Aluminiumsalz granulieren. Diese Verfahrensweise erfordert teure Einsatzprodukte und die Verwendung säurefester Apparaturen.

Aus DOS 2 615 868 ist ein Verfahren zur Herstellung kugelförmiger Tonerdeteilchen bekannt, das durch folgende Schritte gekennzeichnet ist:

a) Herstellung eines Gemisches aus Tonerde, Aluminiumsalz einer starken Säure, wasserunlöslichem Tensid und Wasser
b) Rühren des Gemisches bis zum Erreichen eines Viskositätsminimums und anschließendem Extrudieren
c) Zerteilung des Extrudats in einer Drehtrommel und Kugelformung
d) Trocknung und Kalzinierung des kugeligen Produktes.

Abgesehen von der Verwendung teuren Aluminiumsalzes wird der Einsatz eines Tensids zwingend vorgeschrieben. Außerdem ist dieses Verfahren auf die Herstellung von $Al_2O_3$-haltigen Formkörpern beschränkt, bezüglich des Kornspektrums der resultierenden kugelförmigen Formkörper begrenzt und liefert Produkte, die bezüglich Festigkeit nicht befriedigen.

Aus der DE-OS 2 043 570 ist ein Verfahren zur Herstellung von geformtem Katalysatormaterial bekannt, bei der eine Aufschlämmung aus $Al_2O_3$-Xerogel und $Al_2O_3$-Hydrogel zur Homogenisierung und zur Aufhebung der fluidisierenden Wirkungen der kontinuierlichen Wasserphase einem Druckabfall von wenigstens 140 kg/cm$^2$ ausgesetzt wird. Unterbleibt diese aufwendige Behandlung, so werden Gemische erhalten, die Extrudate liefern, die sich bereits unter Einwirkung des eigenen Gewichtes deformieren und die daher zur Herstellung von kugelförmigen Formkörpern nicht geeignet sind.

Aufgabe der Erfindung ist es, ein neues Verfahren zur Herstellung kugeliger, oxidhaltiger Formkörper auf der Basis $Al_2O_3$ zur Verfügung zu stellen, das die geschilderten Nachteile des Standes der Technik vermeidet. Insbesondere sollen die Einsatzstoffe preiswert und leicht verfügbar bzw. herstellbar sein; die Verfahrensprodukte sollen mechanisch stabil sein und gute Porosität aufweisen.

Das erfindungsgemäße Verfahren geht aus von einem Verfahren zur Herstellung von Formkörpern auf Basis $Al_2O_3$, bei dem man ein plastisches Gemisch aus einer

a) pulverförmigen, überwiegend trockenen Komponente (K1) auf Basis $Al_2O_3$ und
b) pastösen, überwiegend Wasser enthaltenden Komponente (K2) auf Basis $Al_2O_3$

und ggf. weiterem Zusatz von Wasser und/oder weiteren Zusätzen herstellt, dieses Gemisch extrudiert, trocknet und ggf. tempert und ist dadurch gekennzeichnet, daß man als Komponente K2 ein durch Kneten von $\alpha$-Monohydrat mit Säure als Peptisationsmittel erhaltenes Aluminiumoxid/Hydroxid-Gel bzw. -Sol einsetzt und die Extrudate in Strangschnittlinge aufteilt und diese zu im wesentlichen kugelförmigen Formkörpern umformt.

Überraschenderweise gelingt es durch dieses Verfahren glatte Kugeln mit engem Kornspektrum, guter mechanischer Festigkeit und guter Porosität herzustellen.

2

**0 025 900**

Zur Herstellung von Formkörpern auf der Basis $Al_2O_3$ werden als pulverförmige, vorwiegend trockene Komponente (K1) Hydroxide, Oxidhydrate, Übergangsoxide oder Oxide des Aluminiums eingesetzt, deren Charakteristika und Unterschiede in Ullmann, 4. Auflage, Band 7, Seiten 294—300, näher beschrieben sind. Die Feststoffgehalte der pulverförmigen Substanz liegen zwischen 65 und 100 Gew.-%, wobei der Wassergehalt eines jeden Pulvers durch die jeweils chemische Struktur eindeutig festgelegt ist.

Als pastöse, überwiegend Wasser enthaltende Komponente (K2) werden Aluminiumoxid/Hydroxid-Gele bzw. Sole mit einem Feststoffgehalt von 10—50, vorzugsweise 15—40 Gew.-% eingesetzt. Diese Einsatzprodukte sind kommerziell leicht verfügbar, können in einer Verfahrensvariante aber auch leicht selbst hergestellt werden.

Zur Herstellung des pastösen $Al_2O_3$-Gels wird Pseudoböhmit (Alphamonohydrat) einer 0,75—2,5, bevorzugt 1—2stündigen Behandlung in einem Kneter unterworfen, in Anwesenheit von sauren Peptisationsmitteln, die eine Quellung hervorrufen. Bevorzugt werden dabei bei Trocken- oder Tempertemperatur flüchtige oder zersetzliche anorganische oder organische Säuren, wie z. B. Salzsäure, Salpetersäure, Ameisensäure oder Essigsäure, eingesetzt. Die Zusammensetzung der zu knetenden Mischung liegt im folgenden Bereich:

| | | |
|---|---|---|
| $Al_2O_3$ | | 10—50 Gew.-% |
| | bevorzugt | 15—40 Gew.-% |
| $H_2O$ | | 50—90 Gew.-% |
| | bevorzugt | 60—80 Gew.-% |
| Säure (berechnet als | | |
| wasserfreie, 100%ige Säure) | | 0,1—20 Gew.-% |
| | bevorzugt | 0,5—15 Gew.-% |

Nach der DE-A-2 751 269 sind bereits aus US-A-3 917 808 durch Behandlung von $\alpha$-Monohydrat mit sauren Peptitationsmitteln erhaltene Aluminiumoxidgele bekannt. Diese werden aber direkt extrudiert und nicht im Gemisch mit Komponente K1. Ferner geht aus der zitierten Originalstelle hervor, daß zwingend mit einem Gemisch aus mono- und polyprotischen Säuren gearbeitet werden muß. Beim Einsatz nur einer Säure ist die mechanische Festigkeit der grünen Formlinge unzureichend und bei Gegenwart von Wasser zersetzen sich die Extrudate schnell.

Die Komponenten K1 und K2 werden, ggf. unter Zusatz von Wasser und/oder weiteren Komponenten, in einem solchen Verhältnis gemischt, daß der Quotient A = K1 A : K2 A, worin K1 A bzw. K2 A den $Al_2O_3$-Gehalt (Gew.-%) der Komponente 1 bzw. 2 darstellt, Werte von 0,5—25, vorzugsweise 1—21, annimmt.

Zur Durchführung des Verfahrens werden die Komponenten K1 und K2, ggf. unter Zusatz von weiterem Wasser und/oder weiteren Zusätzen in einer Mischapparatur homogen vermischt.

Als mögliche Zusätze hat sich der Einsatz von Stoffen bewährt, die in der Hitze — d. h. bei der Trocknung oder Temperung der Formkörper — flüchtig oder zersetzlich sind. Als Beispiele für diese Zusätze, die in einer Menge von 0—50, vorzugsweise 0,1—35 Gew.-% der pastösen Komponente K2 eingesetzt werden, sind z. B. Stärke, Holzmehl, Dextrin, Cellulosederivate etc. zu nennen.

Des weiteren kann in besonderen Verfahrensvarianten der Zusatz von Metalloxiden, insbesondere Magnesium- und/oder Zinkoxid vorteilhaft sein, die in einer Menge von 0—30, vorzugsweise 10—24 Gew.-% der pulverförmigen Komponente (K1) verwendet werden.

Des weiteren erweist es sich als vorteilhaft, insbesondere dann, wenn das Extrudat nicht in einem kontinuierlich ablaufenden Verfahren direkt den nachfolgenden Verfahrensstufen zugeführt wird, den pH-Wert der pastösen Komponente K2 auf einen Wert pH $\geqq$ 4 einzustellen. Zweckmäßigerweise wird diese Einstellung mit einer bei Trocken- oder Tempertemperatur flüchtigen oder zersetzlichen Säure vorgenommen.

Die auf diese Weise hergestellt, homogene Mischung, die für den Einsatz im Extruder zur Verwendung gelangt, ist durch das folgende Verhältnis von Feststoff zu Wasser gekennzeichnet:

| | |
|---|---|
| Mischung auf Basis $Al_2O_3$ | 0,25 : 1 bis 5,0 : 1 |
| vorzugsweise | 0,5 : 1 bis 3,0 : 1 |

Im erfindungsgemäßen Verfahren wird die fertige, plastische Mischung mit einem Extruder durch eine mit einer oder mehreren Bohrungen versehene Lochplatte verpreßt. Der Querschnitt der Bohrung ist dabei bevorzugt von kreisförmiger Gestalt; ihr Durchmesser ist in weiten Grenzen variierbar und wird nur durch den gewünschten Durchmesser der gemäß diesem Verfahren hergestellten Formkörper bestimmt.

Beim Zerteilen des Extrudats nach an sich bekannten Methoden verfährt man bevorzugt derart, daß man Strangschnittlinge mit einem Länge/Durchmesser-Verhältnis von etwa 1 : 1 erhält.

Die Strangschnittlinge können bereits als solche getrocknet und getempert werden; es ist jedoch ein besonderer Vorteil des erfindungsgemäßen Verfahrens, daß die erhaltenen, plastischen Strangschnittlinge besonders leicht umformbar sind zu im wesentlichen kugelförmigen Formkörpern, die

3

aufgrund der eingangs geschilderten Vorteile ihrer Gestalt heute allgemein bevorzugt werden.

Zu diesem Zweck können die Strangschnittlinge nach an sich bekannten Methoden abgerundet werden, also z. B. in Drehtrommeln, Drehtellern etc. nachbehandelt werden. Besonders feste kugelförmige Formkörper werden erhalten, wenn die Strangschnittlinge in an sich bekannter Weise zusätzlich zu einer Rollbewegung noch gleichzeitig der verfestigenden Einwirkung einer Zentrifugalbeschleunigung ausgesetzt werden. Dieses ist möglich, wenn die Strangschnittlinge in eine vorzugsweise rohr- oder becherförmige Abrundevorrichtung eingebracht werden, bei der jeder Punkt des Querschnittes eine kreisförmige oder annähernd kreisförmige Bewegung ausführt. Im einfachsten Fall ist dieses ein sich um eine gedachte Achse exentrisch bewegender, an der eigenen Drehbewegung um die senkrecht auf der Drehebene stehende Symmetrieachse zumindestens teilweise gehinderter rohr- oder becherförmiger Behälter. Für den kontinuierlichen Betrieb geeignete Behälter weisen entweder geeignete Einbauten wie z. B. Führungsrillen zur Führung der abzurundenden Strangschnittlinge auf, oder sind, beim Fehlen derartiger Einbauten, in Austragsrichtung hin konisch verengt oder geöffnet.

Im erfindungsgemäßen Verfahren werden die Strangschnittlinge dem Abrundungsgefäß kontinuierlich zugeführt. Ihre Verweilzeit in der Vorrichtung kann ebenso wie die Größe der Zentrifugalbeschleunigung durch geeignete Wahl der Geschwindigkeit/Exzentrizität der Bewegung, sowie durch Größe und Höhe des Behälters je nach Notwendigkeit eingerichtet werden.

Nach Durchlaufen der Abrundungsstufe werden die Formkörper einer Trocknungs- und ggf. einer Temperstufe zugeführt.

Die Vorteile des erfindungsgemäßen Verfahrens gegenüber dem Stand der Technik sind wie folgt:

a) es werden kugelförmige Formkörper homogenen Aufbaus, hoher Bruchhärte und guter Porosität hergestellt;

b) es wird kein teures, niedrigprozentiges, flüssiges $Al_2O_3$-Sol, sondern ein preiswertes, hochprozentiges, pastöses Aluminiumoxid/Hydroxid-Gel bzw. -Sol verwendet;

c) teure oder spezielle, in großen Mengen anzuwendende Chemikalien wie Geliermittel, Formöl, Erstarrungslösung, Aluminiumsalz, Tenside entfallen;

d) Alterung und Waschprozeß entfallen;

e) das Kornspektrum ist eng, der mittlere Korndurchmesser in weiten Grenzen variierbar.

Die folgenden Beispiele sollen das erfindungsgemäße Verfahren nur erläutern, aber nicht begrenzen.

## Beispiele

Im weiteren Teil werden folgende Abkürzungen verwendet:

PM = Porosierungsmittel
A = Quotient der $Al_2O_3$-Gehalte in den Komponenten K1 und K2
FS = Quotient Feststoff zu Wasser für den Gesamtansatz
B = Berstdruck (Dimension : Kg; gemessen mit einem Berstdruckgerät der Firma Zwick; Mittelwert aus 25 Messungen)
O = Oberfläche (Dimension : $m^2/g$; gemessen nach der Methode von Haul/Dümbgen)
PV = Porenvolumen (Dimension : ml/g; berechnet aus wahrer und scheinbarer Dichte)
D = Durchmesser (mm)
Ty = Tylose
HM = Holzmehl

## Versuche 1—16

In diesen Versuchen werden kugelförmige Formkörper auf der Basis folgender Oxide hergestellt:

Versuche 1—16: Basis $Al_2O_3$

Die in Tabelle 1 näher spezifizierten pulverförmigen und pastösen Komponenten K1 und K2 wurden gem. den in der Tabelle 2 angegebenen Verhältnissen (in allen Versuchen je 100 g Komponente K2) und ggf. zusammen mit den ebenfalls angeführten Zusätzen in einem Pflugscharmischer im Verlaufe weniger Minuten zu einer homogenen, plastischen Masse gemischt, auf einem Technikums-Extruder durch eine Lochplatte mit einer Bohrung kreisförmigen Querschnitts kalt verpreßt und in Strangschnittlinge zerteilt, die ein Durchmesser/Länge-Verhältnis von etwa 1 aufwiesen. Diese Strangschnittlinge wurden kontinuierlich auf den Boden des Abrundegefäßes gefördert, in dem sie während einer mittleren Verweilzeit zwischen 2 und 40 Sekunden abgerundet wurden. Die kontinuierlich ausgetragenen kugelförmigen Formkörper wurden anschließend 10 Stunden bei 120°C getrocknet und 3 Stunden bei 600°C getempert und zeigten die in der Tabelle angeführten Eigenschaften.

Tabelle 1
Pulverförmige Komponenten K1 und pastöse Komponenten K2 auf Basis $Al_2O_3$

|  | Type | Zusammensetzung $Al_2O_3$ | $H_2O$ |
|---|---|---|---|
| **Komponenten K1** | | | |
| alpha Trihydrat (Hydrargillit) | K1-10 | 65 | 35 |
| chi Übergangsoxid | K1-11 | 99 | 1 |
| kappa Übergangsoxid | K1-12 | 99,7 | 0,3 |
| alpha Monohydrat (Böhmit) | K1-13 | 70 | 30 |
| gamma Übergangsoxid | K1-14 | 99 | 1 |
| delta Übergangsoxid | K1-15 | 99,8 | 0,2 |
| theta Übergangsoxid | K1-16 | 99,9 | 0,1 |
| alpha Aluminiumoxid | K1-17 | 100 | 0 |
| beta Trihydrat (Bayerit) | K1-18 | 65 | 35 |
| eta Übergangsoxid | K1-19 | 98 | 2 |
| **Komponenten K2*)** | | | |
| DH Sol 40 | K2-10 | 31 | 69 |
| DH Sol 20 | K2-11 | 15,5 | 84,5 |

*) Hersteller: Fa. Giulini

0 025 900

Tabelle 2
Kugelförmige Formkörper auf Basis $Al_2O_3$

| Versuch Nr. | Komponente K1 Type K1- | Masse (g) | Type K2- | PM TY (g) | $H_2O$ (g) | A | FS | Kenngrößen der fertigen kugelförmigen Formkörper | | | D |
|---|---|---|---|---|---|---|---|---|---|---|---|
| | | | | | | | | B | O | PV | |
| 1 | 10 | 235,3 | 10 | 0 | 47,1 | 4,94 | 0,93 | 9,0 | 31 | 0,21 | 6,3 |
| 2 | 10 | 223,5 | 10 | 47,1 | 47,1 | 4,70 | 0,73 | 10,1 | 33 | 0,51 | 3,2 |
| 3 | 11 | 74,1 | 10 | 0,2 | 2,1 | 2,36 | 1,45 | 12,0 | 196 | 0,35 | 3,3 |
| 4 | 12 | 166,7 | 10 | 2,8 | 0,0 | 5,36 | 2,72 | 10,9 | 79 | 0,28 | 3,5 |
| 5 | 13 | 50,0 | 10 | 0,6 | 6,3 | 1,21 | 0,78 | 8,9 | 202 | 0,46 | 1,6 |
| 6 | 13 | 880,0 | 10 | 2,4 | 324,0 | 19,90 | 0,98 | 7,5 | 181 | 0,61 | 1,0 |
| 7 | 14 | 74,1 | 10 | 0,2 | 2,1 | 2,36 | 1,45 | 16,1 | 166 | 0,50 | 3,4 |
| 8 | 15 | 160,0 | 10 | 4,0 | 0,0 | 5,17 | 2,60 | 17,2 | 86 | 0,33 | 9,9 |
| 9 | 16 | 150,0 | 10 | 0,3 | 0,0 | 4,83 | 2,61 | 15,7 | 60 | 0,23 | 2,1 |
| 10 | 17 | 146,0 | 10 | 2,4 | 0,0 | 4,71 | 2,48 | 13,9 | 37 | 0,20 | 2,6 |
| 11 | 17 | 166,7 | 10 | 2,8 | 0,0 | 5,38 | 2,76 | 18,6 | 38 | 0,19 | 3,2 |
| 12 | 18 | 235,3 | 10 | 0 | 47,1 | 4,94 | 0,93 | 8,9 | 52 | 0,13 | 3,2 |
| 13 | 19 | 74,1 | 10 | 0,2 | 2,1 | 2,34 | 1,43 | 12,1 | 320 | 0,31 | 3,2 |
| 14 | 13 / 10 | 23,5 / 164,7 | 10 | 0 | 70,6 | 4,01 | 0,76 | 9,7 | 52 | 0,34 | 3,2 |
| 15 | 13 / 10 | 14,9 / 74,6 | 10 | 0 | 74,6 | 1,91 | 0,52 | 8,7 | 73 | 0,40 | 1,6 |
| 16 | 13 | 90,0 | 11 | 0 | 0,0 | 4,10 | 0,70 | 8,1 | 152 | 0,47 | 1,3 |

**0 025 900**

Als Abrundegefäß wurde ein becherförmiger, 65 cm hoher Stahltopf mit einem Innendurchmesser von 28 cm und einem am oberen Ende befindlichen, 6 cm hohen Kragen benutzt. Der an der Eigenrotation gehinderte Topf konnte in eine parallel zu seiner Bodenfläche verlaufende, exzentrische, im wesentlichen kreisförmige Bewegung versetzt werden. Dazu war das Gefäß mit dem Mittelpunkt der Bodenfläche auf einem von einer Motorwelle angetriebenen Arm angebracht, wobei der Abstand der durch den Mittelpunkt der Becherbodenfläche verlaufenden (gedachten) Symmetrieachse des Bechers zur durch die Motorwelle verlaufenden (gedachten) Achse variiert werden konnte und bei den Versuchen 6—10 cm betrug.

Über ein Regelgetriebe war die Umdrehungsgeschwindigkeit des Motors im Bereich zwischen 208—340 Upm stufenlos regelbar; bei den Versuchen wurde mit 310—330 Upm gearbeitet.

Zur Führung der abzurundenden Strangschnittlinge war der Abrundebecher an der Innenseite der Wand spiralförmig mit Führungsrillen halbkugelförmigen Querschnitts von 2,5 cm Durchmesser und einer Gesamtlänge von 15 m versehen. Vom Boden des Gefäßes bis zum Austritt waren insgesamt 18 Windungen angebracht.

Wie bereits erwähnt, wurden die Strangschnittlinge von oben direkt, d. h. in freiem Fall auf den Boden des Abrundegefäßes eingebracht. Nach Durchlaufen des Abrundegefäßes wurden sie durch eine im Kragen des Gefäßes befindliche Austrageöffnung in einem Auffangtrichter geführt und von dort einem Sammelbehälter zugeführt.

## Versuche 17—20

In diesen Versuchen wurden kugelförmige Formkörper auf Basis $Al_2O_3$ hergestellt; die pastöse Komponente K2 ist dazu selbst hergestellt worden.

Dazu wurden gemäß den Angaben in Tabelle 3 Aluminiumoxid des Typs K1-13 und Säure als Peptisationsmittel insgesamt 1—2 Stunden lang in einem Pflugscharmischer geknetet. Bei einigen Versuchen wurde die Säure wie angegeben in 2 Stufen zugesetzt, was aber keinen Unterschied zur einstufigen Arbeitsweise ergab. Der pH-Wert des fertigen Gels lag bei pH $\geq$ 4; diese Gele sind über lange Zeit lagerstabil.

Zur Herstellung der Formkörper (Bedingungen s. Tabelle 4; jeweils 100 g Gel) wurde im wesentlichen wie bei den Versuchen 1—16 gearbeitet. Lediglich das Abrundegefäß wies eine andere Gestaltung auf: Es wurde ein becherförmiges, nach oben konisch verbreitertes Gefäß von 75 cm Höhe mit 6 cm hohem Kragen, unterem Durchmesser von 30 cm und oberem Durchmesser von 35 cm ohne Führungsrillen, d. h. glatten Wänden in ansonsten gleicher Anordnung eingesetzt. Die Eigenschaften der resultierenden Formkörper sind aus Tabelle 4 ersichtlich.

7

Tabelle 3
Herstellung von $Al_2O_3$-Gel (Komponente K2)

| Versuch Nr. | $Al_2O_3$ (kg) | Art | Säure Konz (Gew.-%) | Menge (kg) | Knetzeit (Std.) | Zusammensetzung des Gels (Gew.-%) | | | Type |
|---|---|---|---|---|---|---|---|---|---|
| | | | | | | $Al_2O_3$ | Säure (100%ig) | $H_2O$ | |
| I | 2,5 | $HNO_3$ | 1,0 | 4,5 | 1,0 | 26,79 | 0,64 | 72,57 | K2-30 |
| II | 3,0 | $HNO_3$ | 2,1 | 3,0 | 0,5 | 34,00 | 1,13 | 64,87 | K2-31 |
| | | $HNO_3$ | 2,0 | 0,6 | 1,0 | | | | |
| III | 2,5 | $HNO_3$ | 1,0 | 4,5 | 0,5 | 26,51 | 1,31 | 72,18 | K2-32 |
| | | $HNO_3$ | 65,0 | 0,1 | 1,0 | | | | |
| IV | 2,0 | $HNO_3$ | 2,6 | 3,6 | 1,5 | 26,79 | 1,68 | 71,53 | K2-33 |
| V | 2,0 | $HNO_3$ | 2,1 | 2,0 | 0,5 | 26,68 | 1,71 | 71,61 | K2-34 |
| | | $HNO_3$ | 5,2 | 0,6 | 1,0 | | | | |
| VI | 2,7 | $HNO_3$ | 2,7 | 2,4 | 0,5 | 18,72 | 3,44 | 77,84 | K2-35 |
| | | $HNO_3$ | 5,2 | 0,6 | 1,0 | | | | |
| VII | 2,5 | HCl | 1,0 | 4,5 | 0,5 | 26,36 | 1,65 | 71,99 | K2-36 |
| | | HCl | 65,0 | 0,1 | 1,0 | | | | |
| VIII | 2,5 | $CH_3COOH$ | 18,0 | 4,5 | 2,0 | 26,79 | 11,57 | 61,64 | K2-37 |
| IX | 2,5 | HCOOH | 1,5 | 4,5 | 2,0 | 26,79 | 0,96 | 72,25 | K2-38 |
| X | 2,5 | HCOOH | 2,5 | 4,5 | 1,5 | 26,79 | 1,61 | 71,60 | K2-39 |
| XI | 2,5 | HCOOH | 5,0 | 4,5 | 1,5 | 26,79 | 3,21 | 70,00 | K2-40 |

Tabelle 4
Kugelförmige Formkörper auf Basis $Al_2O_3$

| Versuch Nr. | Komponente K1 | | Type K2- | PM TY (g) | $H_2O$ (g) | A | FS | Kenngrößen der fertigen, kugelförmigen Formkörper | | | D |
| | Type K1- | Masse (g) | | | | | | B | O | PV | |
|---|---|---|---|---|---|---|---|---|---|---|---|
| 17 | 11 | 89,3 | 37 | 0,2 | 2,2 | 3,30 | 1,506 | 11,0 | 184 | 0,56 | 3,4 |
| 18 | 14 | 100,0 | 33 | 0,2 | 1,4 | 3,70 | 1,660 | 8,7 | 170 | 0,54 | 3,4 |
| 19 | 13 | 50,0 | 38 | 0,0 | 0,0 | 1,31 | 0,701 | 16,8 | 163 | 0,66 | 3,0 |
| 20 | 10 | 54,1 | 35 | 0,2 | 1,5 | 1,88 | 0,529 | 6,9 | 82 | 0,51 | 3,1 |

0 025 900

**0 025 900**

## Patentansprüche

1. Verfahren zur Herstellung von Formkörpern auf Basis $Al_2O_3$, bei dem man ein plastisches Gemisch aus einer

a) pulverförmigen, überwiegend trockenen Komponente (K1) auf Basis $Al_2O_3$ und
b) pastösen, überwiegend Wasser enthaltenden Komponente (K2) auf Basis $Al_2O_3$

und ggf. weiterem Zusatz von Wasser und/oder weiteren Zusätzen herstellt, dieses Gemisch extrudiert, trocknet und ggf. tempert,

dadurch gekennzeichnet, daß man

b1) als Komponente K2 ein durch Kneten von $\alpha$-Monohydrat mit Säure als Peptisationsmittel erhaltenes Aluminiumoxid/hydroxid-Gel bzw. Sol einsetzt und
c) die Extrudate in Strangschnittlinge aufteilt und diese zu im wesentlichen kugelförmigen Formkörpern umformt.

2. Verfahren nach Anspruch 1, dadurch gekennzeichnet, daß man als pulverförmige Komponente (K1) Hydroxide, Oxidhydrate, Übergangsoxide oder Oxide des Aluminiums mit einem Feststoffgehalt von 65—100 Gew.-% und als pastöse Komponente (K2) ein pastöses Aluminiumoxid/hydroxid-Gel bzw. Sol mit einem Feststoffgehalt von 10—50 Gew.-%, vorzugsweise 15—40 Gew.-%, einsetzt.

3. Verfahren nach Anspruch 2, dadurch gekennzeichnet, daß K1 und K2 in einem solchen Verhältnis gemischt werden, daß ihre jeweiligen Gehalte an $Al_2O_3$ in der fertigen Mischung das Verhältnis 0,5 : 1 bis 25 : 1, vorzugsweise 1 : 1 bis 21 : 1, bilden.

4. Verfahren nach einem der Ansprüche 1—3, dadurch gekennzeichnet, daß man 0—50, vorzugsweise 0,1—35 Gew.-% der pastösen Komponente K2 durch in der Hitze zersetzliche bzw. flüchtige Stoffe ersetzt.

5. Verfahren nach einem der Ansprüche 1—4, dadurch gekennzeichnet, daß man 0—30, vorzugsweise 10—24 Gew.-% der pulverförmigen Komponente (K1) durch Magnesiumoxid und/oder Zinkoxid ersetzt.

6. Verfahren nach einem der Ansprüche 1—5, dadurch gekennzeichnet, daß man den pH-Wert des extrudierenden Gemisches auf einen Wert von pH 4 oder größer einstellt.

7. Verfahren nach einem der Ansprüche 1—6, dadurch gekennzeichnet, daß in der zu extrudierenden Mischung das Verhältnis von Feststoff zu Wasser für die Herstellung von Teilchen auf Basis $Al_2O_3$ 0,25 : 1 bis 5,0 : 1, vorzugsweise 0,5 : 1 bis 3,0 : 1, beträgt.

8. Verfahren nach einem der Ansprüche 1—7, dadurch gekennzeichnet, daß man das Extrudat zu Strangschnittlingen zerteilt, die ein Länge/Durchmesser-Verhältnis von etwa 1 : 1 aufweisen.

9. Verfahren nach Anspruch 1, dadurch gekennzeichnet, daß man zur Peptisation ein Aluminiumoxidgel folgender Zusammensetzung knetet

| | | |
|---|---|---|
| $Al_2O_3$ | | 10—50 Gew.-% |
| | bevorzugt | 15—40 Gew.-% |
| Wasser | | 50—90 Gew.-% |
| | bevorzugt | 60—80 Gew.-% |
| Säure (ber. als 100%ig) | | 0,1—20 Gew.-% |
| | bevorzugt | 0,5—15 Gew.-% |

10. Verfahren nach Anspruch 9, dadurch gekennzeichnet, daß zur Peptisation eine bei erhöhter Temperatur leicht flüchtige oder zersetzliche organische oder anorganische Säure verwendet wird.

11. Verfahren nach einem der Ansprüche 1—10, dadurch gekennzeichnet, daß die Strangschnittlinge zur Abrundung der Einwirkung der Fliehkraft in der Weise ausgesetzt werden, daß die Abrundung in einer vorzugsweise rohr- oder becherförmigen Abrundevorrichtung erfolgt, bei der jeder Punkt des Querschnittes eine kreisförmige oder annähernd kreisförmige Bewegung ausführt.

12. Verwendung der nach einem der Verfahren gemäß Anspruch 1—11 hergestellten Oxidkugeln als Katalysator oder Katalysatorträger.

10

**0 025 900**

**Claims**

1. Process for the production of shaped bodies based on $Al_2O_3$ in which a plastic mixture of a

a)  pulverulent, predominantly dry constituent (C1) based on $Al_2O_3$ and
b)  pasty constituent (C2) containing predominantly water based on $Al_2O_3$

and if required a further addition of water and/or further additive is produced, this mixture is extruded, dried and annealed if required,

characterized in that

b1)  as constituent C2 an aluminium oxide/hydroxide gel or sol obtained by kneading $\alpha$-monohydrate with acid as peptization agent is used and
c)  the extrudates are divided up into short lengths and these are reformed into substantially spherical shaped bodies.

2. Process according to Claim 1, characterized in that the pulverulent constituent (C1) comprises hydroxides, hydrated oxides, transition oxides or oxides of aluminium with a solids content of $65-100\%$-wt., and the pasty constituent (C2) comprises a pasty aluminium oxide/hydroxide gel or -sol with a solids content of $10-50\%$-wt., preferably $15-40\%$-wt.

3. Process according to Claim 2, characterized in that the C1 and C2 are mixed in such a ratio that their respective contents of $Al_2O_3$ in the finished mixture are in the ratio 0.5 : 1 to 25 : 1, preferably 1 : 1 to 21 : 1.

4 Process according to one of Claims 1—3, characterized in that 0—50, preferably 0.1—35%-wt. of the pasty constituent C2 is replaced by substances which are decomposable or volatilisable by heat.

5. Process according to one of Claims 1—4, characterized in that 0—30, preferably 10—24%-wt. of the pulverulent constituent (C1) is replaced by magnesium oxide and/or zinc oxide.

6. Process according to one of Claims 1—5, characterized in that the pH value of the mixture to be extruded is set to a value of pH 4 or greater.

7. Process according to one of Claims 1—6, characterized in that in the mixture to be extruded, the ratio of solid matter to water for the production of particles based on $Al_2O_3$ is 0.25 : 1 to 5.0 : 1, preferably 0.5 : 1 to 3.0 : 1.

8. Process according to one of Claims 1—7, characterized in that the extrudate is divided up into short lengths, which have a length/diameter ratio of approximately 1 : 1.

9. Process according to Claim 1, characterized in that for peptization an aluminium oxide gel of the following composition is kneaded:

| | | |
|---|---|---|
| $Al_2O_3$ | | $10-50\%$-wt. |
| | preferably | $15-40\%$-wt. |
| Water | | $50-90\%$-wt. |
| | preferably | $60-80\%$-wt. |
| Acid (calculated as 100%) | | $0.1-20\%$-wt. |
| | preferably | $0.5-15\%$-wt. |

10. Process according to Claim 9, characterized in that for peptization an organic or inorganic acid is used which is easily volatilisable or decomposable at elevated temperature.

11. Process according to one of Claims 1—10, characterized in that for rounding off the short lengths are exposed to the effect of centrifugal force, such that the rounding off occurs in a preferably tubular or cup-shaped rounding off device, in which each point of the cross-section performs a circular or approximately circular movement.

12. The use of the oxide pellets produced according to one of the processes in accordance with Claim 1—11, as catalyst or catalyst carrier.

## Revendications

1. Procédé de préparation de corps façonnés à base de $Al_2O_3$, dans lequel on prépare un mélange plastique à partir

a) d'un constituant (K1), en prédominance sec, pulvérulent, à base de $Al_2O_3$ et
b) d'un constituant (K2) contenant en prédominance de l'eau, pâteux, à base de $Al_2O_3$.

avec éventuellement addition complémentaire d'eau et ou d'autres additifs, on extrude ce mélange, on le sèche et éventuellement on le cuit,

caractérisé en ce que:

b1) on emploie comme constituant K2 un gel ou un sol d'oxyde/hydroxyde d'aluminium obtenu par malaxage d'alpha-monohydrate avec d e l'acide comme agent peptisant et,
c) on divise les extrudats en tronçons et on transforme ceux-ci en corps façonnés essentiellement sphériques.

2. Procédé selon la revendication 1, caractérisé en ce que l'on emploie comme constituant pulvérulent (K1), des hydroxydes, des hydrates d'oxyde, des oxydes de transition ou des oxydes d'aluminium ayant une teneur en solide de 65 à 100% en poids et comme constituant pâteux (K2) un gel ou un sol d'oxyde/hydroxyde d'aluminium ayant une teneur en solide de 10 à 50% en poids, de préférence de 15 à 40% en poids.

3. Procédé selon la revendication 2, caractérisé en ce que l'on mélange K1 et K2 dans un rapport tel que, dans chaque c as, leurs teneurs en $Al_2O_3$ dans le mélange fini sont dans un rapport de 0,5 : 1 à 25 : 1, de préférence de 1 : 1 à 21 : 1.

4. Procédé selon l'une quelconque des revendications 1 à 3, caractérisé en ce que l'on remplace 0 à 50%, de préférence 0,1 à 35% en poids du constituant pâteux K2 par des substances qui se décomposent ou qui se volatilisent à la chaleur.

5. Procédé selon l'une quelconque des revendications 1 à 4, caractérisé en ce que l'on remplace 0 à 30%, de préférence 10 à 24% en poids du constituant pulvérulent (K1) par de l'oxyde de magnésium et/ou de l'oxyde de zinc.

6. Procédé selon l'une quelconque des revendications 1 à 5, caractérisé en ce que l'on ajuste le pH du mélange à extruder à une valeur égale ou supérieure à 4.

7. Procédé selon l'une quelconque des revendications 1 à 6, caractérisé en ce que le rapport solide sur eau dans le mélange à extruder pour la fabrication de particules à base de $Al_2O_3$ est de 0,25 : 1 à 5,0 : 1, de préférence de 0,5 : 1 à 3,0 : 1.

8. Procédé selon l'une quelconque des revendications 1 à 7, caractérisé en ce que l'on fragmente l'extrudat en tronçons qui présentent un rapport longueur/diamètre d'environ 1 : 1.

9. Procédé selon la revendication 1, caractérisé en ce que l'on malaxe pour la peptisation un gel d'oxyde d'aluminium ayant la composition suivante

| | | |
|---|---|---|
| $Al_2O_3$ | | 10 à 50% en poids |
| | de préférence | 15 à 40% en poids |
| Eau | | 50 à 90% en poids |
| | de préférence | 60 à 80% en poids |
| Acide (calculé en acide à 100%) | | 0,1 à 20% en poids |
| | de préférence | 0,5 à 15% en poids |

10. Procédé selon la revendication 9, caractérisé en ce que l'on emploie pour la peptisation un acide organique ou minéral, facilement volatilisable ou décomposable à température élevée.

11. Procédé selon l'une quelconque des revendications 1 à 10, caractérisé en ce que pour arrondir les tronçons, on soumet ceux-ci à l'action de la force centrifuge, de façon que l'arrondissage se fasse dans un dispositif d'arrondissage, de préférence en forme de tube ou de gobelet, dans lequel chaque point de la section transversale exécute un mouvement circulaire ou approximativement circulaire.

12. Utilisation des corps sphériques d'oxydes préparés par un procédé selon les revendications 1 à 11, comme catalyseurs ou supports de catalyseur.